# DEMANDE DE BREVET EUROPEEN

(11) **EP 1 178 687 A1**
(43) Date de publication de la demande: **06.02.2002**
(21) Numéro de dépôt: 01202836.1
(22) Date de dépôt: 24.07.2001
(51) Int. Cl.: H04N 7/24

(54) **Traitement d'un ensemble de données dont certaines peuvent être non-valides**

(30) Priorité: 31.07.2000 FR 0010047
(71) Demandeur: Koninklijke Philips Electronics N.V., 5621 BA Eindhoven (NL)
(72) Inventeur: Lafage, Anne, 75008 Paris (FR); Gobert, Jean, 75008 Paris (FR)
(74) Mandataire: Chaffraix, Jean

(57) **Abrégé**

Un dispositif de traitement comprend un circuit d'entrée [INP], un réseau d'interconnexion [ICN] et un circuit de traitement de données [PRC]. Le circuit d'entrée [INP] forme des groupes successifs de données [GRP] et, en outre, génère une donnée de contrôle de base [BCD] et une donnée de contrôle supplémentaire [SCD] pour chaque groupe de données [GRP]. Une donnée de contrôle de base [BCD] indique pour chaque donnée une parmi plusieurs bornes [1-4] à laquelle la donnée doit être appliquée. Une donnée de contrôle supplémentaire [SCD] indique pour chaque donnée si cette donnée d'entrée est valide [+] ou non [-]. Le réseau d'interconnexion [ICN] applique les groupes successifs de données aux bornes [1-4] en fonction de la donnée de contrôle de base [BCD] et de la donnée de contrôle supplémentaire [SCD]. Le réseau d'interconnexion [ICN] applique une donnée à la borne indiquée par la donnée de contrôle de base [BCD] si la donnée est valide [+]. Si la donnée n'est pas valide [-], le réseau d'interconnexion [ICN] applique à sa place une autre donnée étant valide. Le circuit de traitement de données [PRC] traite les données appliquées aux bornes [1-4] afin d'obtenir une donnée de sortie.

Un tel dispositif permet un traitement à faible coût d'un ensemble de données dont certaines peuvent être non-valides. Le dispositif peut être appliqué, par exemple, pour filtrer un ensemble de pixels issue d'un décodage MPEG4.

## Description

### DOMAINE TECHNIQUE

L'invention concerne le traitement d'un ensemble de données. L'invention peut être appliquée, par exemple, pour filtrer un ensemble de pixels obtenu par un décodage selon la norme MPEG4 (MPEG est l'abréviation pour le terme anglais Motion Picture Experts Group).

### ETAT DE LA TECHNIQUE ANTERIEURE

Le traitement d'un ensemble de données peut être effectué au moyen d'un circuit de traitement qui fournit une donnée de sortie en réponse à un groupe de données. Le circuit de traitement reçoit chaque donnée du groupe par une borne différente. Un filtre FIR est un exemple d'un tel circuit de traitement. (FIR est l'abréviation pour le terme anglais Finite Impulse Response.) Un coefficient de filtrage spécifique est associé à chaque borne. Le filtre multiplie une donnée appliquée à une certaine borne par le coefficient de filtrage associée à cette borne. Ainsi, on obtient une donnée pondérée. Le filtre additionne les données pondérées ainsi obtenues afin d'obtenir une donnée de sortie. La donnée de sortie ne sera correcte que si chaque donnée du groupe est appliquée à une borne spécifique.

Dans une implémentation telle que décrit précédemment, il y aura un circuit d'entrée pour former des groupes successifs de données afin de les appliquer au circuit de traitement. Le circuit d'entrée peut être disposé d'une telle façon qu'il n'y a pas de relation fixe entre la position d'une donnée dans un groupe et la borne à laquelle cette donnée doit être appliquée. Par exemple, le circuit d'entrée peut former un groupe de données qui comprend quatre données : A, B, C et D selon leurs positions respectives. Les données A, B, C et D doivent respectivement être appliquées aux bornes numérotées 1, 2, 3 et 4. Ensuite, le circuit d'entrée peut former un groupe suivant qui comprend les données E, B, C, D selon leurs positions respectives (A est remplacée par E). Les données E, B, C et D doivent respectivement être appliquées aux bornes numérotées 4, 1, 2, et 3.

Il est possible d'appliquer les groupes successifs de données au circuit de traitement au moyen d'un réseau d'interconnexion. Le réseau d'interconnexion permet, en effet, de modifier les positions respectives des données formant un groupe. Par conséquent, le réseau d'interconnexion permet d'appliquer chaque donnée à la borne appropriée.

### EXPOSE DE L'INVENTION

Un but de l'invention est de permettre un traitement à faible coût d'un ensemble de données dont certaines peuvent être non-valides.

Selon l'invention, un tel traitement est caractérisé comme suit. Un circuit d'entrée forme des groupes successifs de données et, en outre, génère une donnée de contrôle de base et une donnée de contrôle supplémentaire pour chaque groupe de données. Une donnée de contrôle de base indique pour chaque donnée une borne parmi plusieurs bornes à laquelle la donnée doit être appliquée. Une donnée de contrôle supplémentaire indique pour chaque donnée si cette donnée d'entrée est valide ou non. Un réseau d'interconnexion applique les groupes successifs de données aux bornes en fonction de la donnée de contrôle de base et de la donnée de contrôle supplémentaire. Le réseau d'interconnexion est disposé pour appliquer une donnée à la borne indiquée par la donnée de contrôle de base si la donnée est valide. Si la donnée n'est pas valide, le réseau d'interconnexion applique à sa place une autre donnée étant valide. Un circuit de traitement de données traite les données appliquées aux bornes afin d'obtenir une donnée de sortie.

L'invention prend les aspects suivants en considération. Un ensemble de données peut contenir des données non-valides. Par exemple, un ensemble de pixels issue d'un décodage MPEG4 représente typiquement un objet visuel. Certains pixels appartiendront à l'objet tandis que d'autres pixels n'appartiendront pas à l'objet. Ces derniers pixels sont non-valides.

Si un ensemble de données contient des données non-valides, il existe un risque de distorsion. Une distorsion se produira quand un groupe de données contient une ou plusieurs données non-valides tandis que la donnée de sortie qui en résulte est considérée comme valide. Par exemple, considérons un filtrage FIR symétrique. En général, la donnée de sortie du filtrage FIR sera considérée comme valide si la donnée appliquée à la borne centrale du filtre FIR est valide. Supposons maintenant qu'une autre donnée du groupe soit non-valide. Dans ce cas, la donnée de sortie sera pour une partie déterminée par cette donnée non-valide ce qui implique une distorsion du résultat du filtrage FIR.

Il est possible d'éviter le risque d'une distorsion au moyen d'un pré-traitement de l'ensemble de données. Le pré-traitement consiste à attribuer à chaque donnée non-valide une valeur de substitution (en anglais : padding value). Cette valeur de substitution sera généralement déterminée à partir d'une ou plusieurs données valides. Par exemple, la valeur de substitution peut être la moyenne des valeurs de toutes les données valides. Cette valeur de substitution sera donc générique et adaptée pour être attribuée à chaque donnée non-valide. Une autre option consiste à calculer une valeur de substitution pour chaque donnée non-valide prise individuellement.

Toutefois, un pré-traitement tel que décrit précédemment sera relativement complexe et, par conséquent, lent et coûteux. Par exemple, le calcul d'une valeur de substitution générique nécessite la prise en compte de toutes les données valides. Si une valeur de substitution est calculée pour chaque donnée non-valide prise individuellement, il y aura également de nombreuses opérations à effectuer.

Selon l'invention, une donnée non-valide est en effet remplacée par une donnée valide au moyen du réseau d'interconnexion. Cette substitution est donc effectuée lors de l'application d'un groupe de données au circuit de traitement de données. Ainsi, il n'y a pas besoin d'effectuer un pré-traitement afin d'attribuer une valeur de substitution à chaque donnée non-valide. Par conséquent, l'invention permet un traitement de données moins coûteux et plus rapide.

Ces aspects de l'invention ainsi que d'autres aspects seront décrits plus en détail en référence aux Figures suivantes.

### BREVE DESCRIPTION DES FIGURES

La Figure 1 est un diagramme conceptuel illustrant des caractéristiques de base décrites précédemment ;
La Figure 2 est un diagramme illustrant un dispositif de filtrage vidéo MPEG4 ;
La Figure 3 est un diagramme illustrant un procédé selon lequel un ensemble de pixels d'entrée et un ensemble de valeurs booléennes sont stockés dans le dispositif de filtrage vidéo MPEG4 ; et
La Figure 4 est un diagramme illustrant un dispositif de multiplexage faisant partie du dispositif de filtrage vidéo MPEG4.

### MODES DE REALISATION DE L'INVENTION

Les remarques suivantes concernent les signes de référence. Des entités similaires sont désignées par une référence par lettres identique dans toutes les Figures. Plusieurs entités similaires peuvent apparaître dans une seule Figure. Dans ce cas, un chiffre ou un suffixe est ajouté à la référence par lettres afin de distinguer des entités similaires. Le chiffre ou le suffixe peut être omis pour des raisons de convenance. Ceci s'applique pour la description ainsi que pour les revendications.

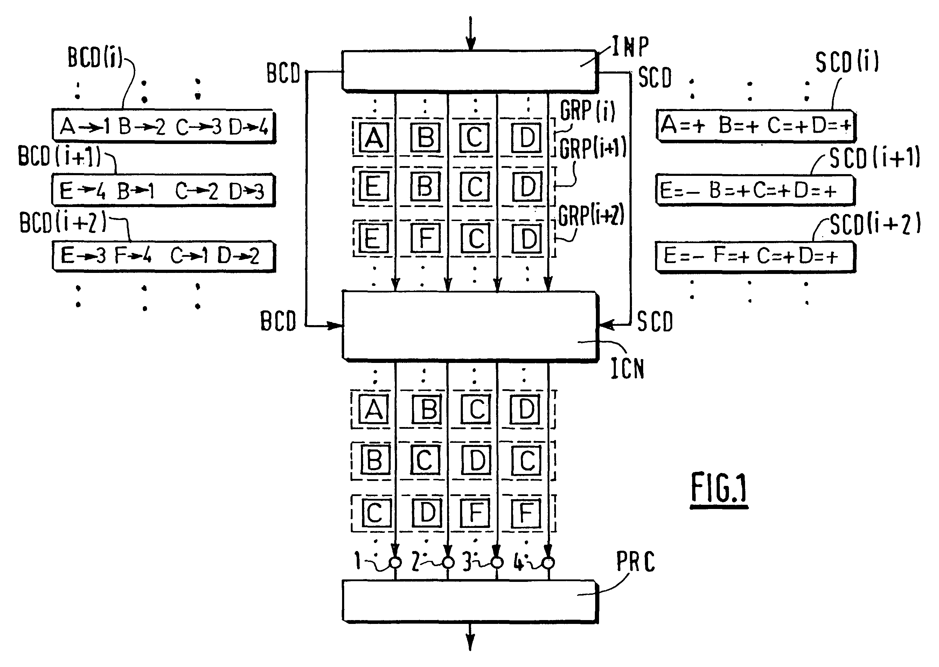

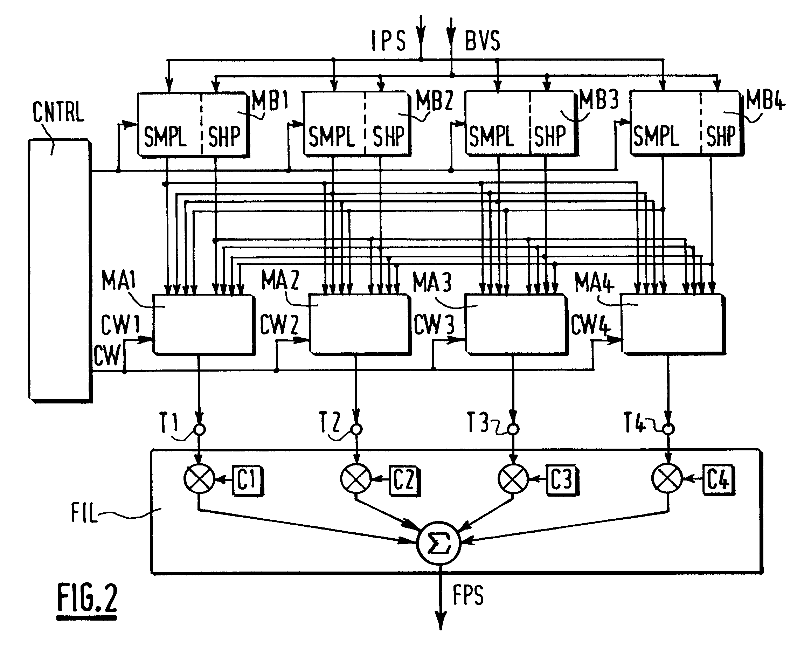

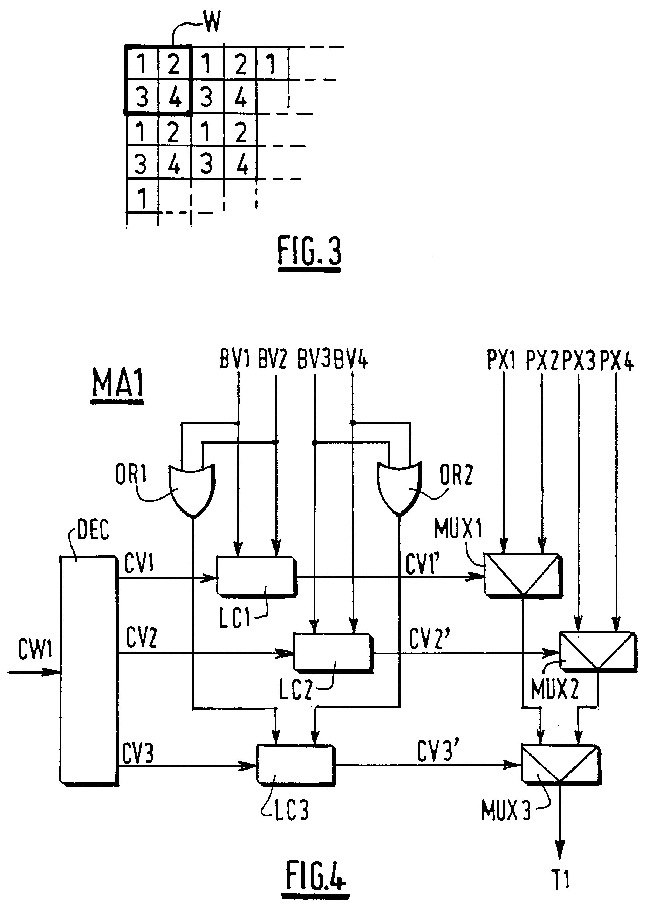

La Figure 1 illustre les caractéristiques de base décrites précédemment. Un dispositif de traitement de données comprend un circuit d'entrée [INP], un réseau d'interconnexion [ICN] et un circuit de traitement de données [PRC]. Le circuit d'entrée [INP] forme des groupes successifs de données [GRP] et, en outre, génère une donnée de contrôle de base [BCD] et une donnée de contrôle supplémentaire [SCD] pour chaque groupe de données [GRP]. Une donnée de contrôle de base [BCD] indique pour chaque donnée une parmi plusieurs bornes [1-4] à laquelle la donnée doit être appliquée. Une donnée de contrôle supplémentaire [SCD] indique pour chaque donnée si cette donnée d'entrée est valide [+] ou non [-]. Le réseau d'interconnexion [ICN] applique les groupes successifs de données aux bornes [1-4] en fonction de la donnée de contrôle de base [BCD] et de la donnée de contrôle supplémentaire [SCD]. Le réseau d'interconnexion [ICN] applique une donnée à la borne indiquée par la donnée de contrôle de base [BCD] si la donnée est valide [+]. Si la donnée n'est pas valide [-], le réseau d'interconnexion [ICN] applique à sa place une autre donnée étant valide. Le circuit de traitement de données [PRC] traite les données appliquées aux bornes [1-4] afin d'obtenir une donnée de sortie.

Les caractéristiques illustrées à la Figure 1 peuvent être appliquées, par exemple, pour traiter un ensemble de pixels obtenu par un décodage selon la norme MPEG4. Un tel ensemble de pixels représente typiquement un objet comme, par exemple, une personne, un ballon ou une maison. Il est accompagné d'un ensemble de valeurs booléennes. Il y a une valeur booléenne pour chaque pixel. La valeur booléenne indique si le pixel concerné appartient à l'objet ou non. Donc, l'ensemble des valeurs booléennes est une description de forme.

La Figure 2 illustre un dispositif de filtrage vidéo MPEG4. Le dispositif de filtrage vidéo MPEG4 reçoit un ensemble de pixels d'entrée [IPS] et un ensemble de valeurs booléennes [BVS] qui lui est associé. En réponse, il fournit un ensemble de pixels filtré [FPS]. Le dispositif de filtrage vidéo MPEG4 comprend 4 bancs de mémoire [MB] numérotés du premier au quatrième [MB1-MB4]. Chaque banc de mémoire [MB] comprend une partie [SMPL] pour stocker des pixels et une autre partie [SHP] pour stocker des valeurs booléennes. Le dispositif de filtrage vidéo MPEG4 comprend, en outre, un circuit de contrôle [CNTRL], quatre dispositifs de multiplexage [MA] numérotés du premier au quatrième [MA1-MA4] et un filtre [FIL] ayant quatre prises (en anglais : taps) [T] numérotées de la première à la quatrième [T1-T4]. Un coefficient de filtrage [C] est associé à chaque prise [T].

Le dispositif de filtrage vidéo MPEG4 fonctionne comme suit. Le dispositif de filtrage vidéo MPEG4 reçoit l'ensemble de pixels d'entrée [IPS] sous forme d'un flux. En parallèle, il reçoit l'ensemble de valeurs booléennes [BVS] également sous forme de flux. Les deux flux sont synchronisés. Pour chaque pixel et valeur booléenne reçus, le circuit de contrôle [CNTRL] sélectionne un certain banc de mémoire [MB] dans lequel le pixel et la valeur booléenne sont stockés. Ainsi, l'ensemble de pixels d'entrée [IPS] et l'ensemble de valeurs booléennes [BVS] sont stockés dans les quatre bancs de mémoire [MB] selon un certain procédé.

La Figure 3 illustre le procédé selon lequel l'ensemble de pixels d'entrée et l'ensemble de valeurs booléennes sont stockés dans les bancs de mémoire. La Figure 3 montre partiellement une matrice. Cette matrice représente à la fois l'ensemble de pixels d'entrée et l'ensemble de valeurs booléennes. Chaque cellule de la matrice représente un pixel et la valeur booléenne qui lui est associée. Le numéro figurant dans une cellule est le numéro du banc de mémoire dans lequel le pixel et la valeur booléenne sont stockés. Par exemple, le pixel en haut et à gauche [1] de l'ensemble de pixels d'entrée est stocké dans le premier banc de mémoire. Son voisin de droite [2], son voisin de dessous [3] et son voisin diagonal [4] sont respectivement stockés dans les deuxième, troisième et quatrième bancs de mémoire.

La Figure 3 illustre également une fenêtre [W]. La taille de la fenêtre [W] est de 2 fois 2 cellules. La fenêtre [W] désigne quatre pixels et quatre valeurs booléennes stockés dans les bancs de mémoire. Ces pixels et valeurs booléennes sont l'objet d'une première lecture de banc de mémoire. La fenêtre [W] se déplace d'une unité vers la droite pour une deuxième lecture de banc de mémoire. La fenêtre [W] continue de se déplacer unité par unité vers la droite jusqu'à ce qu'elle arrive à l'extrême droite de la matrice. Ensuite, la fenêtre [W] retourne à l'extrême gauche de la matrice en ce déplaçant d'une unité vers le bas. La fenêtre [W] effectue donc un balayage horizontal de la matrice. Chaque position différente de la fenêtre [W] correspond à une lecture de quatre pixels et de quatre valeurs booléennes.

Il convient de noter que le procédé illustré à la Figure 3 possède la caractéristique suivante. Pour n'importe quelle position de la fenêtre [W], chaque pixel et chaque valeur booléenne désignée par la fenêtre [W] se trouve dans un banc de mémoire différent. Par conséquent, il suffit de faire une seule lecture par banc de mémoire pour obtenir tous les pixels désignés par la fenêtre. Ces lectures peuvent se faire en parallèle. Donc, en principe, un cycle d'horloge suffit pour lire tous les pixels désignés par la fenêtre. Par conséquent, le procédé illustré à la Figure 3 permet une lecture rapide et, par conséquent, un filtrage rapide.

Chaque lecture effectuée en déplaçant la fenêtre [W] dans la Figure 3, produit un groupe de pixels qui donne lieu à un pixel de sortie. Le pixel de sortie est obtenu au moyen du filtre [FIL] illustré à la Figure 2. Il y a une relation fixe entre la position d'un pixel dans la fenêtre [W] et la prise [T] à laquelle le pixel est destiné à être appliqué. Le pixel en haut et à gauche de la fenêtre est destiné à être appliqué à la première prise [T1]. Le pixel en haut et à droite de la fenêtre est destiné à être appliqué à la deuxième prise [T2]. Le pixel en bas et à gauche de la fenêtre est destiné à être appliqué à la troisième prise [T3]. Le pixel en bas et à droite de la fenêtre est destiné à être appliqué à la quatrième prise [T4].

Le circuit de contrôle [CNTRL] illustré à la Figure 2 effectue les lectures décrites précédemment. Chaque lecture produit donc un groupe de quatre pixels. Le circuit de contrôle [CNTRL] fournit un ensemble de mots de contrôle [CW] avec chaque lecture. L'ensemble de mots de contrôle [CW] indique pour chaque pixel du groupe, la prise [T] à laquelle le pixel est destiné à être appliqué.

Plus en détail, le circuit de contrôle [CNTRL] génère quatre mots de contrôle numérotés du premier au quatrième [CW1-CW4] respectivement pour le premier au quatrième dispositif de multiplexage [MA1-MA4]. Le premier mot de contrôle [CW1] indique le banc de mémoire [MB] d'où vient le pixel destiné à être appliqué à la première prise [T1]. Pareillement, les deuxième, troisième et quatrième mots de contrôle [CW2, CW3, CW4] indiquent respectivement les bancs de mémoire [MB] d'où viennent les pixels destinés à être appliqués aux deuxième, troisième et quatrième prises [T2, T3, T4]. Chaque mot de contrôle [CW] peut, par exemple, comprendre une valeur binaire de deux bits. Cette valeur indique le banc de mémoire [MB] d'où vient le pixel destiné à être appliqué à la prise [T] concernée.

Le circuit de contrôle [CNTRL] peut être implémenté, par exemple, au moyen de compteurs programmables. Un compteur programmable peut servir pour sélectionner un banc de mémoire [MB] lors de l'écriture de l'ensemble de pixels d'entrée [IPS]. Quatre compteurs programmables peuvent servir pour générer des adresses lors de l'écriture, soit un compteur programmable pour chaque banc de mémoire [MB]. Le compteur programmable pour la sélection d'un banc de mémoire [MB] activera parmi ces quatre compteurs programmables, le compteur programmable appartenant au banc de mémoire [MB] sélectionné. Quatre autres compteurs programmables peuvent servir pour faire la lecture afin de former des groupes successifs de pixels. Ces quatre compteurs programmables généreront, pour chaque lecture, quatre adresses en parallèle, soit une adresse pour chaque banc de mémoire [MB]. D'autres compteurs programmables peuvent servir pour générer les mots de contrôle [CW]. Les mots de contrôle [CW] sont cycliques ce qui se comprend aisément à partir de la Figure 3 et la description de celle-ci.

Les groupes successifs de pixels sont appliqués au filtre [FIL] au moyen des dispositifs de multiplexage [MA] illustrés à la Figure 2. Il y a un dispositif de multiplexage [MA] pour chaque prise [T] du filtre [FIL]. Chaque dispositif de multiplexage [MA] reçoit le groupe de pixels produit par la lecture courante et le groupe de valeurs binaires qui lui est associé. Il reçoit en outre le mot de contrôle [CW] qui lui appartient. Le dispositif de multiplexage [MA] sélectionne un pixel afin d'appliquer ce pixel à la prise [T] du filtre [FIL] à laquelle le dispositif de multiplexage [MA] appartient. Le dispositif de multiplexage [MA] sélectionne le pixel indiqué par le mot de contrôle [CW] à condition que ce pixel soit valide. Cette dernière information est contenue dans la valeur binaire qui est associée au pixel. Si le pixel n'est pas valide, le dispositif de multiplexage sélectionne un autre pixel qui est valide. Si aucun pixel du groupe n'est valide, le dispositif de multiplexage [MA] sélectionne un pixel à façon aléatoire. Dans ce dernier cas, le pixel de sortie qui résulte du groupe de pixels sera non-valide et, par conséquent, sa valeur n'importera pas.

Le filtre [FIL] multiplie les pixels appliqués aux prises [T] par les coefficients de filtrage [C] respectifs qui leur appartiennent. La multiplication du pixel appliqué à la première prise [T1] par le premier coefficient de filtrage [C1] donnera un premier pixel pondéré. La multiplication du pixel appliqué à la deuxième prise [T2] par le deuxième coefficient de filtrage [C2] donnera un deuxième pixel pondéré, etcetera. Les quatre pixels pondérés ainsi obtenus sont additionnés afin d'obtenir un pixel de sortie.

La Figure 4 illustre le premier dispositif de multiplexage [MA1]. Les autres dispositifs de multiplexage [MA2, MA3, MA4] illustrés dans la Figure 2 sont identiques. Comme décrit précédemment, le premier dispositif de multiplexage [MA1] reçoit un groupe de quatre pixels [PX], un groupe de quatre valeurs [BV] binaires qui lui est associé et le premier mot de contrôle [CW1] provenant du circuit de contrôle [CNTRL]. En réponse, le premier dispositif de multiplexage [MA1] sélectionne un pixel afin de l'appliquer à la première prise [T1] du filtre [FIL] illustré à la Figure 3. Les pixels [PX] sont numérotés du premier au quatrième [PX1-PX4]. Les valeurs binaires [BV] sont également numérotées de la première à la quatrième [BV1-BV4]. Les numéros indiquent les bancs de mémoires respectives [MB1-MB4] desquels les pixels et les valeurs binaires sont extraits.

Le premier dispositif de multiplexage [MA1] comprend un circuit de décodage [DEC], un premier et un deuxième circuit OU [OR1, OR2] (en anglais : OR circuit), trois circuits logiques [LC] numérotés du premier au troisième [LC1-LC3] et trois multiplexeurs [MUX] numérotés du premier au troisième [MUX1-MUX3]. Les premier, deuxième et troisième circuits logiques [LC1-LC3] sont respectivement associés aux premier, deuxième et troisième multiplexeurs [MUX1-MUX3]. Les trois multiplexeurs [MUX] sont du type deux entrées / une sortie. Un multiplexeur sélectionne une entrée afin de transférer la donnée sur cette entrée vers un autre circuit.

Le premier dispositif de multiplexage [MA1] fonctionne comme suit. Le circuit de décodage [DEC] décode le premier mot de contrôle [CW1] afin d'obtenir trois valeurs de contrôle de base [CV] numérotées de la première à la troisième [CV1-CV3]. Les première, deuxième et troisième valeurs de contrôle de base [CV1-CV3] sont respectivement associées aux premier, deuxième et troisième multiplexeurs [MUX1-MUX3]. Chaque valeur de contrôle de base [CV] indique l'entrée que le multiplexeur [MUX] concerné doit sélectionner.

Comme chaque multiplexeur [MUX] ne sélectionne qu'entre deux entrées, chaque valeur de contrôle de base [CV] peut être codée sur un seul bit. Par exemple, si la valeur de contrôle de base [CV] est égale à zéro (0), elle indique que le multiplexeur [MUX] concerné doit sélectionner l'entrée gauche. En revanche, si la valeur de contrôle de base [CV] est égale à un (1), elle indique que le multiplexeur [MUX] doit sélectionner l'entrée droite. Supposons que le mot de commande [CW] indique le deuxième pixel [PX2]. Dans ce cas, la première valeur de contrôle de base [CV1] sera égale à un (1) et la troisième valeur de contrôle de base [CV3] sera égale à zéro (0). La deuxième valeur de contrôle de base [CV2] ne jouera aucun rôle dans ce cas et, par conséquent, pourra être égale à zéro (0) ou un (1).

Les circuits logiques [LC] sont disposés entre le circuit de décodage [DEC] et les multiplexeurs [MUX] afin de pouvoir modifier les valeurs de contrôle de base [CV]. Chaque circuit logique [LC] reçoit deux valeurs en fonction desquelles la valeur de contrôle de base [CV] est modifiée ou non. Ces deux valeurs sont formées à partir des valeurs binaires [BV] qui sont associées aux pixels [PX] concernés. Chaque circuit logique [LC] fournit donc une valeur de contrôle finale [CV'] identique à la valeur de contrôle de base [CV] ou opposée à celle-ci en fonction des valeurs binaires [BV]. La valeur de contrôle finale [CV'] détermine la sélection effectuée par le multiplexeur [MUX] auquel elle est appliquée.

Plus en détail, le premier circuit logique [LC1] modifie ou ne modifie pas la première valeur de contrôle de base [CV1] en fonction de la première et de la deuxième valeur binaire [BV1, BV2]. Supposons que la première valeur de contrôle de base [CV1] soit égale à zéro (0). Ainsi, la première valeur de contrôle de base [CV1] indique que le premier multiplexeur [MUX1] doit sélectionner le premier pixel [PX1]. Supposons en outre que la première valeur binaire [BV1], qui est associée au premier pixel [PX1], soit égale à un (1). Cela veut dire que ce pixel est valide. Dans ce cas, le premier circuit logique [LC1] ne modifie pas la première valeur de contrôle de base [CV1]. La première valeur de contrôle finale [CV1'] est donc égale à zéro (0) et, par conséquent, le premier multiplexeur [MUX1] sélectionne effectivement le premier pixel [PX1]. Supposons maintenant que la première valeur binaire [BV1] soit égale à zéro (0) et que la deuxième valeur binaire [BV2] soit égale à un (1). Cela veut dire que le premier pixel [PX1] n'est pas valide tandis que le deuxième pixel [PX2] est valide. Dans ce cas, le premier circuit logique [LC1] modifie la première valeur de contrôle de base [CV1]. La première valeur de contrôle finale [CV1'] est donc égale à un (1) et, par conséquent, le premier multiplexeur [MUX1] sélectionne le deuxième pixel [PX2] au lieu du premier pixel [PX1].

Le premier circuit logique [LC1] fonctionne d'une façon comparable si la première valeur de contrôle de base [CV1] est égale à un (1). Dans ce cas, il vérifiera, en effet, si le deuxième pixel [PX2] est valide. Si le deuxième pixel [PX2] n'est pas valide, le premier circuit logique [LC1] modifiera la première valeur de contrôle de base [CV1] pour faire en sorte que le premier multiplexeur [MUX1] sélectionne le premier pixel [PX1] à condition que celui-ci soit valide.

Le deuxième circuit logique [LC2] fonctionne de la même façon que le premier circuit logique [LC1] décrit précédemment. La deuxième valeur de contrôle de base [CV2] prend la place de la première valeur de contrôle de base [CV1]. Les troisième et quatrième valeurs binaires [BV3, BV4] prennent respectivement la place des première et deuxième valeurs binaires [BV1, BV2]. Le deuxième multiplexeur [MUX2] prend la place du premier multiplexeur [MUX1]. Les troisième et quatrième pixels [PX3, PX4] prennent respectivement la place des premier et deuxième pixels [PX1, PX2].

Le troisième circuit logique [LC3] reçoit deux combinaisons OU de valeurs binaires [BV]. Les premier et deuxième circuits OU [OR1, OR2] fournissent respectivement une première combinaison OU et une deuxième combinaison OU. La première combinaison OU est le résultat d'une fonction OU appliquée aux première et deuxième valeurs binaires [BV1, BV2]. Elle indique si le pixel sélectionné par le premier multiplexeur [MUX1] est valide ou non. La deuxième combinaison OU est le résultat d'une fonction OU appliquée aux troisième et quatrième valeurs binaires [BV3, BV4]. Elle indique si le pixel sélectionné par le deuxième multiplexeur [MUX2] est valide ou non.

Le troisième circuit logique [LC3] fonctionne de la même façon que le premier circuit logique [LC1] décrit précédemment. La troisième valeur de contrôle de base [CV3] prend la place de la première valeur de contrôle de base [CV1]. Les première et deuxième combinaisons OU prennent respectivement la place des première et deuxième valeurs binaires [BV1, BV2]. Le troisième multiplexeur [MUX3] prend la place du premier multiplexeur [MUX1]. Les pixels sélectionnés par le premier et deuxième multiplexeurs [MUX1, MUX2] prennent respectivement la place des premier et deuxième pixels [PX1, PX2].

Le dispositif de filtrage vidéo MPEG4 décrit précédemment en référence aux Figures 2-4 est un exemple d'implémentation des caractéristiques illustrées à la Figure 1. Le circuit d'entrée [INP], illustré à la Figure 1, est implémenté sous la forme des quatre bancs de mémoires [MB1-MB4] et du circuit de contrôle [CNTRL] illustrés à la Figure 2. La donnée de contrôle de base [BCD], illustré à la Figure 1, est implémentée sous la forme des quatre mots de contrôle [CW1-CW4] illustrés à la Figure 2. La donnée de contrôle supplémentaire [SCD] est implémentée sous la forme des quatre valeurs binaires [BV1-BV4] illustrées à la Figure 4, les valeurs binaires étant issues des bancs de mémoires [MB] illustrés à la Figure 2. Le réseau d'interconnexion [ICN], illustré à la Figure 1, est implémenté sous la forme des quatre dispositifs de multiplexage [MA1-MA4] illustrés à la Figure 2. Le circuit de traitement de données [PRC], illustré à la Figure 1, est implémenté sous la forme du filtre [FIL] illustré à la Figure 2.

La description ci-dessus en référence aux différentes Figures illustre l'invention plutôt qu'elle ne la limite. Il est évident qu'il existe de nombreuses alternatives qui rentrent dans la portée des revendications ci-jointes. A cet égard quelques remarques sont faites en conclusion.

Il existe de nombreuses manières pour former des groupes successifs de données. Le dispositif de filtrage vidéo MPEG4 illustré à la Figure 2 forme des groupes de quatre données. D'autres implémentations de l'invention peuvent, par exemple, former des groupes de deux, trois, cinq ou six données, etcetera. Le nombre de données compris dans un groupe n'importe pas.

Il existe de nombreuses manières pour traiter un groupe de données. Le dispositif de filtrage vidéo MPEG4 illustré à la Figure 2 fait une combinaison pondérée d'un groupe de données. D'autres implémentations de l'invention peuvent effectuer d'autres types de traitement comme, par exemple, une transformation en cosinus discrète.

Il existe de nombreuses manières pour réarranger un groupe de données. Le dispositif de filtrage vidéo MPEG4 illustré à la Figure 2 comprend quatre dispositifs de multiplexage [MA1-MA4], chacun étant composé de trois multiplexeurs [MUX1-MUX3] du type deux entrées / une sortie comme illustré à la Figure 4. D'autres implémentations de l'invention peuvent comprendre d'autres types de multiplexeurs. Par exemple, il est possible de remplacer les quatre dispositifs de multiplexage [MA1-MA4] illustrés à la Figure 2 par un seul multiplexeur du type seize entrées / quatre sorties et un circuit logique approprié. Il est également possible de remplacer les trois multiplexeurs du type deux entrées / une sortie illustrés à la Figure 4 par un seul multiplexeur du type quatre entrées / une sortie. A cet égard, il convient de noter que le dispositif de multiplexage illustré à la Figure 4 comprend, en fait, deux couches de multiplexage : une première couche comprenant le premier et deuxième multiplexeurs [MUX1, MUX2] et une deuxième couche comprenant le troisième multiplexeur [MUX3]. Remplacer les trois multiplexeurs du type deux entrées / une sortie illustrés à la Figure 4 par un seul multiplexeur du type quatre entrées / une sortie consiste donc à former un dispositif de multiplexage comprenant une seule couche au lieu de deux couches. Supposons maintenant que les groupes de données comprennent 8 données au lieu de 4 données comme illustré à la Figure 4. Dans ce cas, il est possible, par exemple, d'implémenter un dispositif de multiplexage ayant une seule couche au moyen d'un multiplexeur du type huit entrées / une sortie, ou ayant deux couches au moyen de multiplexeurs du type quatre entrées / une sortie, ou ayant trois couches au moyen de multiplexeurs du type deux entrées / une sortie.

Il existe de nombreuses manières pour implémenter des fonctions au moyen d'articles physiques (en anglais : items of hardware) ou de logiciels (en anglais : software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Par exemple, le dispositif de filtrage vidéo MPEG4 illustré à la Figure 2 comprend différents blocs qui, en combinaison, forment des groupes de données et les traitent. En principe, il est possible d'implémenter ces blocs au moyen d'un circuit d'ordinateur convenablement programmé. Un jeu d'instructions contenu dans une mémoire de programmation peut provoquer le circuit d'ordinateur à effectuer les différentes opérations décrites précédemment en référence aux Figures 2-4. Le jeu d'instructions peut être chargé dans la mémoire de programmation par la lecture d'un support de données comme, par exemple, un disque qui contient le jeu d'instructions. La lecture peut s'effecteur par l'intermédiaire d'un réseau de communication comme, par exemple, l'Internet. Dans cas, un fournisseur de service (en anglais : service provider) mettra le jeu d'instructions à la disposition des intéressées.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou ces étapes.

## Revendications

1. Dispositif de traitement de données comprenant :
- un circuit d'entrée [INP] pour former des groupes successifs de données [GRP] et pour générer une donnée de contrôle de base [BCD] et une donnée de contrôle supplémentaire [SCD] pour chaque groupe de données [GRP], une donnée de contrôle de base [BCD] indiquant pour chaque donnée une parmi plusieurs bornes [1, 2, 3, 4] à laquelle la donnée doit être appliquée, une donnée de contrôle supplémentaire [SCD] indiquant pour chaque donnée si cette donnée d'entrée est valide [+] ou non [-] ;
- un réseau d'interconnexion [ICN] pour appliquer les groupes successifs de données [GRP] aux bornes [1, 2, 3, 4] en fonction de la donnée de contrôle de base [BCD] et de la donnée de contrôle supplémentaire [SCD], le réseau d'interconnexion [ICN] étant disposé pour appliquer une donnée à la borne indiquée par la donnée de contrôle de base [BCD] si la donnée et valide [+] et, si la donnée n'est pas valide [-], pour appliquer à sa place une autre donnée étant valide ; et
- un circuit de traitement de données [PRC] pour traiter les données appliquées aux bornes afin d'obtenir une donnée de sortie.

2. Méthode de traitement de données comprenant les étapes suivantes :
- une étape de formation [INP] dans lequel des groupes successifs de données [GRP] sont formés et une donnée de contrôle de base [BCD] et une donnée de contrôle supplémentaire [SCD] sont générées pour chaque groupe de données [GRP], une donnée de contrôle de base [BCD] indiquant pour chaque donnée une parmi plusieurs bornes [1, 2, 3, 4] à laquelle la donnée doit être appliquée, une donnée de contrôle supplémentaire [SCD] indiquant pour chaque donnée si cette donnée d'entrée est valide [+] ou non [-] ;
- une étape d'application [ICN] dans lequel les groupes successifs de données [GRP] sont appliqués aux bornes [1, 2, 3, 4] en fonction de la donnée de contrôle de base [BCD] et de la donnée de contrôle supplémentaire [SCD], le réseau d'interconnexion [ICN] étant disposé pour appliquer une donnée à la borne indiquée par la donnée de contrôle de base [BCD] si la donnée et valide [+] et, si la donnée n'est pas valide [-], pour appliquer à sa place une autre donnée étant valide ; et
- une étape de traitement [PRC] dans lequel les données appliquées aux bornes sont traitées afin d'obtenir une donnée de sortie.

3. Produit "programme d'ordinateur" pour un dispositif de traitement de données, le produit "programme d'ordinateur" comprenant un jeu d'instructions qui, quand il est chargé dans le dispositif de traitement de données, amène celui-ci à effectuer les étapes suivantes :
- une étape de formation [INP] dans lequel des groupes successifs de données [GRP] sont formés et une donnée de contrôle de base [BCD] et une donnée de contrôle supplémentaire [SCD] sont générées pour chaque groupe de données [GRP], une donnée de contrôle de base [BCD] indiquant pour chaque donnée une parmi plusieurs bornes [1, 2, 3, 4] à laquelle la donnée doit être appliquée, une donnée de contrôle supplémentaire [SCD] indiquant pour chaque donnée si cette donnée d'entrée est valide [+] ou non [-] ;
- une étape d'application [ICN] dans lequel les groupes successifs de données [GRP] sont appliqués aux bornes [1, 2, 3, 4] en fonction de la donnée de contrôle de base [BCD] et de la donnée de contrôle supplémentaire [SCD], le réseau d'interconnexion [ICN] étant disposé pour appliquer une donnée à la borne indiquée par la donnée de contrôle de base [BCD] si la donnée et valide [+] et, si la donnée n'est pas valide [-], pour appliquer à sa place une autre donnée étant valide ; et
- une étape de traitement [PRC] dans lequel les données appliquées aux bornes sont traitées afin d'obtenir une donnée de sortie.
